# EUROPÄISCHE PATENTSCHRIFT

(11) **EP 1 106 591 B1**
(45) Veröffentlichungstag und Bekanntmachung des Hinweises auf die Patenterteilung: **05.10.2011**
(21) Anmeldenummer: 00124608.1
(22) Anmeldetag: 10.11.2000
(51) Int. Cl.: C05G 3/08, C05D 9/00, C05F 3/00

(54) **Düngemittelformulierungen die Polysulfonsäuren enthalten**
Fertiliser formulations containing polysulfonic acid
Formulations d'engrais contenant de l'acide polysulfonique

(30) Priorität: 03.12.1999 DE 19958269
(43) Veröffentlichungstag der Anmeldung: 13.06.2001
(73) Patentinhaber: K+S Nitrogen GmbH, 68165 Mannheim (DE)
(72) Erfinder: Erhardt, Klaus, Dr., 69181 Leimen (DE); Rädle, Matthias, Dr., 67273 Weisenheim (DE); Czikkely, Vilmos, Dr., 68167 Mannheim (DE); Bühler, Gerd, 67346 Speyer (DE)
(74) Vertreter: Walther, Robert

(56) Entgegenhaltungen:
- EP-A- 0 135 963
- EP-A- 0 188 969
- GB-A- 960 109
- US-A- 3 565 599
- US-A- 4 673 429

## Beschreibung

Die vorliegende Erfindung betrifft eine Düngemittelformulierung sowie ein Verfahren zur Herstellung der Formulierung , die eine Polysulfonsäure mit Mineraldüngemitteln oder Gülle oder Flüssigdünger und einen Nitrifikationsinhibitor enthält. Gegenstand der Erfindung ist ebenfalls ein Düngeverfahren mit der Düngemittelformulierung.

Um Pflanzen in der Landwirtschaft den von ihnen benötigten Stickstoff zur Verfügung zu stellen, werden im wesentlichen Ammoniumverbindungen als Düngemittel eingesetzt.

Ammoniumverbindungen werden im Boden in relativ kurzer Zeit mikrobiell zu Nitrat umgesetzt (Nitrifikation). Nitrat kann jedoch aus dem Boden ausgewaschen werden und dadurch ins Grundwasser gelangen. Der ausgewaschene Anteil steht dabei für die Pflanzenernährung nicht mehr zur Verfügung, so daß aus diesem Grund eine schnelle Nitrifikation unerwünscht ist. Zur besseren Ausnutzung des Düngers werden deshalb dem Dünger Nitrifikationsinhibitoren zugesetzt. Eine bekannte Gruppe von Nitrifikationsinhibitoren sind z.B. Pyrazole.

Pyrazole haben jedoch eine hohe Flüchtigkeit. Bei der Lagerung von Pyrazolen enthaltenden Düngerzubereitungen tritt daher ein kontinuierlicher Verlust an Wirkstoff durch Verdampfung auf. Deshalb müssen die Pyrazole durch geeignete Maßnahmen in einer nichtflüchtigen Form formuliert werden.

Aus der EP 166 420 sind Düngemittelformulierungen bekannt, die Alkylarylsulfonate, Mineraldünger, Ammoniumsulfatsalpeter oder Harnstoff und Pyrazole wie 3, 4 Dimethylpyrazol, sowie halogenierte Pyrazolderivate enthalten. In dieser EP-Schrift werden auch grenzflächenaktive Verbindungen der allgemeinen Formel R-Aᵣ SO₄M offenbart, wobei R zumeist für eine unverzweigte Alkylgruppe und M für einwertige Kationen in der Regel Natrium steht.

Aus der DE-A-196 31 764 ist die Verwendung von anorganischen und organischen Polysäuren zur Behandlung von Mineraldüngemitteln, die einen Nitrifikationsinhibitor enthalten, bekannt. Als anorganische Polysäuren werden u.a. Polyphosphorsäure und Polykieselsäure und als organische Polysäuren ausschließlich Polycarbonsäuren wie Poly(meth)acrylsäure beschrieben.

Diese Düngemittelformulierungen waren noch verbesserungsbedürftig.

Aus der DE-A-198 49 496 sind nichtflüchtige Alkylderivate bekannt. Diese sind durch zusätzlichen chemischen Aufwand auf Basis der Alkylpyrazole hergestellt und damit gegenüber den einfachen Alkylpyrazolen und deren Salze in der Herstellung aufwendig.

Der vorliegenden Erfindung lag daher die Aufgabe zugrunde, den zuvor genannten Nachteilen abzuhelfen und so zu einer verbesserten und dennoch einfach herzustellenden Düngemittelformulierung zu gelangen.

Die Lösung der Aufgabe ergibt sich aus der

Düngemittelformulierung des Anspruchs 1 sowie dem Verfahren zur Herstellung der Düngemittelformulierung gemäß Anspruch 2. Gegenstand ist ebenfalls ein Düngeverfahren unter Anwendung der Düngemittelformulierung des Anspruchs 1.

Die Düngemittelformulierung kann wie folgt hergestellt werden:
Mineraldüngemittel, Gülle oder Flüssigdünger können mit einem Nitrifikationsinhibitor und einer Polysulfonsäure versetzt werden. Die Polysulfonsäure kann in neutraler oder bevorzugt in säurestabilisierter Form vorliegen. Die Polysulfonsäure und der Nitrifikationsinhibitor können nacheinander in beliebiger Reihenfolge oder gemeinsam mit dem Mineraldüngemittel, der Gülle oder dem Flüssigdünger vermischt werden. Es ist auch möglich eine Mischung enthaltend Mineraldüngemittel, Gülle oder Flüssigdünger und einen Nitrifikationsinhibitor auf den zu behandelnden Boden auszubringen und anschließend jedoch in derselben Düngeperiode Polysulfonsäure auf den zu behandelnden Boden auszubringen. Auch die umgekehrte Ausbringung, in der zuerst Polysulfonsäure und dann die Mischung enthaltend Mineraldüngemittel, Gülle oder Flüssigdünger und der Nitrifikationsinhibitor ausgebracht werden, ist möglich.

Im Falle von Mineraldüngemitteln können der Nitrifikationsinhibitor und die Polysulfonsäure als dünne Schicht oder Film auf die Kornoberfläche aufgebracht werden, z.B. durch Tränken, Sprühen, Auf tropfen oder Eingranulieren, bevorzugt durch Auftropfen oder Aufsprühen, besonders bevorzugt durch Auftropfen . Das Mineraldüngemittel kann mit einem Nitrifikationsinhibitor und einer Polysulfonsäure beispielsweise in einer flüssigen Zubereitung, z.B. einer Lösung oder Suspension der Polysulfonsäure und des Nitrifikationsinhibitors nacheinander in beliebiger Reihenfolge oder gemeinsam z.B. durch Tränken, Aufsprühen, durch Auftropfen oder Eingranulieren, bevorzugt durch Auftropfen oder Aufsprühen, besonders bevorzugt Auftropfen behandelt werden (DE-A-41 28 828). Um eine bevorzugte rasche Entfernung des Lösungs- bzw. Suspensionsmittels, beispielsweise Wasser, zu erzielen, kann das Mineraldüngemittel und/oder die Lösung bzw. Suspension vorgeheizt werden oder es kann der Düngemittelformulierung durch Vakuumverdampfung das Lösungs- bzw. Suspensionsmittel entzogen werden. Es können auch Schmelzen einer Polysulfonsäure und einem Nitrifikationsinhibitor eingesetzt werden.

Die Herstellung der Pyrazole I ist z.B. aus EP-A-474 037, DE-A-3 840 342 oder EP-A-467 707 bekannt. Zur Herstellung von N-Hydroxymethylpyrazolen können die entsprechenden Pyrazole in Methanol mit Formalinlösung umgesetzt werden, überschüssiges Lösungsmittel verdampft und die N-Hydroxymethylpyrazole als Festkörper erhalten werden. Die Herstellung von 3,4-Dimethylpyrazol kann gemäß J.Org.Chem. 20, (1955), 1681 bis 1682 durchgeführt werden.

Säureadditonssalze der Pyrazole I kann man durch Umsetzung der Pyrazole I z.B. mit einem Äquivalent einer entsprechenden Säure erhalten. Die Herstellung des Hydrochlorids von 4-Chlor-3-methylpyrazol ist aus Liebigs Anm. Chem. 598, (1956), Seite 186 und 194 bekannt.

Bei der Düngemittelformulierung kann im Falle eines Mineraldüngemittels der Nitrifikationsinhibitor im Gemisch oder auf der Oberfläche des Mineraldüngemittels vorliegen. Vorzugsweise liegt der Nitrifikationsinhibitor im Gemisch mit der Polysulfonsäure vor.

Düngemittelformulierungen enthalten in der Regel Mineraldüngemittel, Gülle oder Flüssigdünger als Hauptbestandteil und 0,001 bis 5 Gew.-%, bevorzugt 0,005 bis 3 Gew.-%, besonders bevorzugt 0,01 bis 1,5 Gew.-%, insbesondere 0,05 bis 1 Gew.-% Nitrifikationsinhibitor und 0,001 bis 5 Gew.-%, bevorzugt 0,005 bis 3 Gew.-%, besonders bevorzugt 0,01 bis 1,5 Gew.-%, insbesondere 0,05 bis 1 Gew.-% Polysulfonsäure.

Als Polysulfonsäuren eignen sich:
Poly-[1-naphthalin]-sulfonsäure und Poly-[2-naphthalin] - sulfonsäure, Poly-[1,n-naphthalin] -disulfonsäuren (mit n = 2 bis 8), 2-, 3- oder 9-Methylnaphthalinsulfonsäure, Kondensate aus den 1- oder 2-Naphthalinsulfonsäure mit Formaldehyd.

Als Mineraldüngemittel eignen sich beispielsweise Ammonium und/oder Harnstoff enthaltende Düngemittel. Ammoniumhaltige Düngemittel sind beispielsweise Stickstoff/Phosphor/Kali-(NPK)-Düngemittel, Kalkammonsalpeter, Ammonsulfatsalpeter, Ammoniumsulfat und Ammoniumphosphat, Ammoniumnitrat oder Diammoniumphosphat.

Die Mineraldüngemittel können in Pulverform oder in Granulatform vorliegen.

Als Flüssigdünger eignen sich:
Alle Nährstoffmischungen, die NH₃-N oder NH₄-N enthalten, wie Ammoniumnitrat, Ammoniumnitrat-Harnstofflösungen, wäßriger Ammoniak, Ammonsulfat, Monoammonphosphat, Diammonphosphat jeweils als Lösung oder Suspension.

Als Gülle eignet sich jede Art von Gülle unabhängig von ihrem Ursprung und ihrer Herkunft.

Als Nitrifikationsinhibitoren eignen sich 3,4 Dimethylpyrazol oder Säureadditionssalze.

Unter "Pyrazolverbindungen" werden alle Pyrazolverbindungen verstanden, die eine nitrifikationsinhibierende Wirkung aufweisen, wie sie z.B. in US-A 3 635 690, US-A 4 522 642 und DE-A 4 128 828, beschrieben sind.

Pyrazole der allgemeinen Formel I 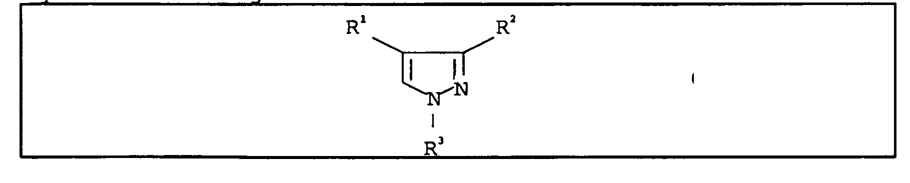 mit R¹, R² = Methyl und R³ = H oder als Säureadditionssalz liegen vor.
Insbesondere eignen sich Pyrazole der allgemeinen Formel I als Nitrifikationsinhibitoren, bei denen R³ Wasserstoff ist.

Die Pyrazole I können in der basischen Form oder in Form von Säureadditionssalzen mit anorganischen Mineralsäuren und organischen Säuren eingesetzt werden. Als anorganische Mineralsäure eignet sich Phosphorsäure, Schwefelsäure. Als eigenen sich beispielsweise C₂- bis C₈-Carbonsäure wie Ameisensäure und Essigsäure oder Fettsäuren oder monoethlyenisch ungesättigte Mono- oder Dicarbonsäuren mit 3 bis 6 C-Atomen oder deren entsprechende Anhydride, wie beispielsweise Acrylsäure, Methacrylsäure, Ethylacrylsäure, Allylessigsäure, Crotonsäure, Vinylessigsäure, Maleinsäure, Itaconsäure, Mesaconsäure, Fumarsäure, Citraconsäure, Methylenmalonsäure, sowie deren Ester, wie z.B. Maleinsäuremonoalkylester oder deren Gemische. Im Falle von Dicarbonsäuremonoalkylestern bezieht sich die angegebene Anzahl der C-Atome auf das Dicarbonsäuregerüst, die Alkylgruppe im Esterrest kann davon unabhängig 1 bis 20 C-Atome, bevorzugt 1 bis 8 C-Atome, insbesondere 1 bis 4 C-Atome aufweisen. Als entsprechende monoethylenisch ungesättigte Dicarbonsäureanhydride kommen Maleinsäureanhydrid, Itaconsäureanhydrid, Citraconsäureanhydrid und deren Gemische in Betracht. Bevorzugt werden Acrylsäure, Methacrylsäure, Maleinsäure, Itaconsäure und Maleinsäureanhydrid eingesetzt. Besonders bevorzugt wird Acrylsäure eingesetzt.

Die diese Carboxylgruppen oder Carbonsäuregruppen enthaltenden Monomere können homopolymerisiert oder copolymerisiert werden mit weiteren vinylischen Monomeren, wie beispielsweise C₁- bis C₈-Alkylene, vorzugsweise C₁- bis C₄-Alkylenen, insbesondere Ethylen oder Propylen.

Die anorganischen oder organischen Polysäure können als freie Säuren oder als teilweise neutralisierte Ammonium-, Alkali- oder Erdalkalimetallsalze eingesetzt werden. Vorzugsweise werden die Polysäuren als freie Säuren eingesetzt.

Beispiele entsprechender Salze sind auch die Hydrochloride und Phosphorsäure-Additionssalze.

Die Pyrazolverbindungen können einzeln oder in Form von Gemischen eingesetzt werden.

Besonders bevorzugte Pyrazolverbindungen sind 3,4-Dimethylpyrazol, sowie die Phosphorsäure-Additionssalze von 3,4-Dimethylpyrazol .

Die erfindungsgemäßen Düngemittelformulierungen eignen sich in einem Düngeverfahren zum Ausbringen auf Böden, bevorzugt zum Ausbringen auf Ackerböden, besonders bevorzugt auf Ackerböden für Mais-, Baumwolle-, Weizen-, Reis-, Gerste- und/oder Zuckerrübenkulturen.

Die Menge der ausgebrachten erfindungsgemäßen Düngemittelformulierungen kann in weiten Bereichen schwanken und liegt in der Regel bei 50 bis 6000 kg/ha, bevorzugt 150 bis 3000 kg/ha, besonders bevorzugt 300 bis 2000 kg/ha.

### Beispiele

### Lagerversuch

Die Lagerversuche wurden durchgeführt in klimatisierten Schränken, bei denen eine konstante Temperatur von 30°C und eine konstante relative Luftfeuchtigkeit von 60 % eingestellt wurde.

Die Proben wurden in flachen Glasschalen von 6 cm Durchmesser eingewogen, so daß 10 g Düngemittel in einer flachen Schüttung lagern.

In den Klimaschränken lag bei Normaldruck ein 4-facher Luftwechsel pro Stunde vor.

Weiterhin wurde darauf geachtet, daß die lokalen Strömungsgeschwindigkeiten innerhalb des Klimaschrankes ortsunabhängig waren, so daß jede Probe gleichen Abdampfbedingungen ausgesetzt war.

In Vorversuchen konnte festgestellt werden, daß diese Bedingungen die Flüchtigkeit an der Oberfläche in realen Haufwerken sehr gut simulieren. Die Proben wurden im Beispiel nach 4 Wochen Lagerung im geschlossenen Schrank herausgenommen, die Probe zermalen und bei der Extraktionslösung mit HPLC der DMP-Gehalt im Vergleich zum Gehalt vor der Lagerung bestimmt. Es können auch kürzere und längere Lagerzeiten realisiert werden.

Die in Tabelle 1 angegebenen Abkürzungen bedeuten:
DMP = Dimethylpyrazol
DMPP = Dimethylpyrazolphosphat
V-Schmelze = Polynaphthalinsulfonsäure
Nachfolgende Tabelle 1 zeigt, daß der Einsatz von Polysulfonsäuren eine deutliche Verbesserung der Stabilisierung bewirkt.

Hierbei wurde z.B. NPK (Stickstoff/Phosphor/Kali)-Düngern, bei NP-Düngern und reinem Stickstoffdüngern, wie beispielsweise Harnstoff und ASS (Ammonsulfatsalpeter) verbesserte Stabilisierung erreicht.

Die aufgeführten Düngemittel werden meist durch ihre Gehalte an Nährstoffen (20+8+8 bedeutet 20 % N, 8 % P₂O_{5,} 8 % K₂O) charakterisiert. Die vierte Zahl weist auf den Magnesiumgehalt hin.

**Tabelle 1**

| Lagerversuche mit Pyrazolen auf Dünger | | | | | | |
|---|---|---|---|---|---|---|
| Lagerversuche 4 Wochen | | | | | | |
| Träger des Pyrazols | Pyrazol | Datum Beginn Lagerver | Datum Ende Lagerver | Datum Analyse vor Lagerver | % rel. % Verlust A/B | rel. Verlust Mw. |
| 13+9+16+4 | 3,4DMPP | 26.01.98 | 23.02.98 | 22.01.98 | 38,3 | 34,6 |
| | | | | | 30,9 | |
| 13+9+16+4 | 3,4DMP-V- | 26.01.98 | 23.02.98 | 22.01.98 | 7,6 | 6,1 |
| | Schmelze | | | | 4,6 | |
| ASS | 3,4DMP- | 26.01.98 | 23.02.98 | 22.01.98 | 10,0 | 14,3 |
| | Phosphat | | | | 18,6 | |
| ASS | 3,4DMP- | 26.01.98 | 23.02.98 | 22.01.98 | 1,4 | 1,6 |
| | V-Schmelze | | | | 1,8 | |
| Harnstoff | 3,4DMPP | 01.07.99 | 29.07.99 | 29.07.99 | 67,8 | 57,5 |
| | | | | | 47,2 | |
| Harnstoff | 3,4DMP- | 08.02.99 | 08.03.99 | 09.03.99 | 8,4 | 6,6 |
| | V-Schmelze | | | | 4,7 | |
| 20+8+8 | 3,4DMPP | 02.11.98 | 30.11.98 | 17.11.98 | 50,6 | 48,4 |
| | | | | | 46,2 | |
| 20+8+8 | 3,4DMP- | 02.11.98 | 30.11.98 | 17.11.98 | -2,4 | 1,1 |
| | V-Schmelze | | | | 4,6 | |
| 22+13+0 | 3,4DMPP | 17.08.98 | 31.08.98 | 10.08.98 | 100,0 | 100,0 |
| | | | | | 100,0 | |
| | | | | | 100,0 | |
| 22+13+0 | 3,4DMP- | 02.11.98 | 30.11.98 | 17.11.98 | 0,7 | 2,9 |
| | V-Schmelze | | | | 5,0 | |
| 18+5+10 | 3,4DMPP | 17.08.98 | 31.08.98 | 10.08.98 | 100,0 | 100,0 |
| | | | | | 100,0 | |
| | | | | | 100,0 | |
| 18+5+10 | 3,4DMP-V- | 02.11.98 | 30.11.98 | 17.11.98 | 1,3 | 1,2 |
| | Schmelze | | | | 1,2 | |
| 24+0+0+3 | 3,4DMPP | 28.05.98 | 22.06.98 | 23.06.98 | 100,0 | 100,0 |
| 24+0+0+3 | 3,4DMP- | 08.02.99 | 08.03.99 | 09.03.99 | 34,1 | 21,5 |
| | V-Schmelze | | | | 18,2 | |
| | | | | | 12,2 | |
| 12+12+17 | 3,4DMPP | 01.07.99 | 29.07.99 | 29.07.99 | 100,0 | 100,0 |
| | | | | | 100,0 | |
| 12+12+17 | 3,4DMP- | 08.02.99 | 08.03.99 | 09.03.99 | 21,0 | 17,6 |
| | V-Schmelze | | | | 12,8 | |
| | | | | | 18,8 | |

## Patentansprüche

1. Düngemittelformulierung, die eine Polysulfonsäure mit Mineraldüngemitteln oder Gülle oder Flüssigdünger und einen Nitrifikationsinhibitor enthält, **dadurch gekennzeichnet, dass** der Nitrifikationsinhibitor 3,4-Dimethylpyrazol und die Polysulfonsäure Polynaphthalinsulfonsäure ist, wobei die Polynaphthalinsulfonsäure in 0,001 bis 5 Gew% und der Nitrifikationsinhibitor in 0,001 bis 5 Gew % enthalten ist.

2. Formulierung gemäß Anspruch 1, **dadurch gekennzeichnet, dass** das Düngemittel Ammoniumsulfatsalpeter ist.

3. Verfahren zur Herstellung einer Düngemittelformulierung gemäß, dem Anspruch 1, **dadurch gekennzeichnet, dass** man Mineraldüngemittel, die Gülle oder den Flüssigdünger mit der Polynaphthalinsulfonsäure und dem Nitrifikationsinhibitor 3,4-Dimethylpyrazol in Kontakt bringt, wobei die Polynaphthalinsulfonsäure in einer Menge von 0,001 bis 5 Gew. % und der Nitrifikationsinhibitor in einer Menge von 0,001 bis 5 Gew. % zugegeben werden.

4. Düngeverfahren, **dadurch gekennzeichnet, dass** man die Düngemittelformulierungen gemäß dem Anspruch 1 auf Böden, in Wasser und/oder in Nährflüssigkeiten ausbringt.

## Claims

1. A fertilizer formulation which contains a polysulfonic acid with mineral or liquid manure or liquid fertilizer and a nitrification inhibitor, wherein the nitrification inhibitor id 3,4-dimethylpyrazole and the polysulfonic acid is polynaphthalene sulfonic acid, whereby polynaphthalene sulfonic acid is contained in 0.001 to 5 weight percentages and the nitrification inhibitor is contained in 0.001 to 5 weight percentages.

2. Formulation according to Claim 1, wherein the fertilizer is ammonium sulfate nitrate.

3. Method for the manufacture of a fertilizer formulation according to Claim 1, wherein the mineral fertilizer, the liquid manure, or the liquid fertilizer is brought into contact with polynaphthalene sulfonic acid and the nitrification inhibitor 3,4-dimethylpyrazole, whereby polynaphthalene sulfonic acid is added in a concentration ranging from 0.001 to 5 weight percentages and the nitrification inhibitor is added in a concentration ranging from 0.001 to 5 weight percentages.

4. Fertilization method wherein the fertilizer formulations according to Claim 1 are applied to soils, in water and/or in nutrient liquids.

## Revendications

1. La formule d'engrais se compose d'un acide poly-sulfonique avec un engrais minéral ou du fumier ou du fertilisant liquide, et d'un inhibiteur de nitrification, **caractérisé par** la présence de l'inhibiteur de nitrification 3,4-diméthyle-pyrazole et de l'acide poly-sulfonique sous forme d'acide sulfonique de poly-naphtalène. La teneur du 3,4-diméthyle-pyrazole peut aller de 0,001 jusqu'à 5 % en poids ; de même la teneur de l'acide sulfonique de poly-naphtalène peut varier de 0,001 jusqu'à 5 % en poids.

2. La formulation selon la revendication 1, **caractérisée en ce que** l'engrais est un fertilisant Ammoniacal azoté soufré.

3. Le procédé de fabrication d'une formule d'engrais selon la revendication 1 est **caractérisé par** un mélange d'engrais minéral, de fumier ou de fertilisant liquide avec l'acide sulfonique de poly-naphtalène et l'inhibiteur de nitrification 3,4-diméthyle-pyrazole, dans lequel la teneur en acide sulfonique de poly-naphtalène peut aller de 0,001 jusqu'à 5 % en poids, de même pour le 3,4-diméthyle-pyrazole.

4. La méthode de fertilisation est **caractérisée par** épandage des formules d'engrais selon la revendication 1 sur les sols, dans l'eau et/ou dans les liquides nutritifs.
